# EUROPEAN PATENT SPECIFICATION

(11) **EP 4 006 684 B1**
(45) Date of publication and mention of the grant of the patent: **09.08.2023**
(21) Application number: 20204236.2
(22) Date of filing: 30.11.2020
(51) Int. Cl.: G05D 23/02, F24D 19/10

(54) **THERMOSTATIC VALVE ATTACHMENT**
THERMOSTATVENTILBEFESTIGUNG
FIXATION DE SOUPAPE THERMOSTATIQUE

(43) Date of publication of application: 01.06.2022
(73) Proprietor: Danfoss A/S, 6430 Nordborg (DK)
(72) Inventor: Kjærskov, Troels, 6430 Nordborg (DK); Clausen, Anders Østergaard, 6430 Nordborg (DK); Markvart, Arne, 6430 Nordborg (DK)
(74) Representative: Keil & Schaafhausen Patentanwälte PartGmbB

(56) References cited:
- EP-A1- 3 404 300
- EP-A1- 3 438 542
- EP-A2- 1 701 235
- US-A1- 2020 182 374

## Description

The present invention relates to a thermostatic valve attachment comprising a base, a handle connected to the base, a thermostatic element arranged at least partly in the handle, and tactile feedback means, wherein the handle is rotatable around an axis of rotation.

Such a thermostatic valve attachment is known, for example, from EP 0 044 904 B1. The tactile feedback means have the effect that the handle is rotated stepwise, so that the person adjusting a new temperature setpoint feels something when he rotates the handle. The tactile feedback means are arranged in a ring attached to the base and surrounding a lower part of the handle. This requires additional parts when assembling the valve attachment.

EP 1 701 235 A2 describes a control head of a thermostatic valve. A control head for a flow valve comprises a housing which may be rotated about the central axis. The housing may be moved axially between an unlocked position and a locked position. In the unlocked position, rotation of the housing causes axial movement of the sensing element and thus opens or closes the valve. In the locked position, rotation of the housing is prevented by locking teeth.

EP 3 404 300 A1 describes a thermostat control mechanism and a mixer valve. The thermostat control mechanism comprises a thermostatic valve member having a spindle and a rotary handle attached to the spindle. The housing in cooperates a thermostatic valve element, a stop ring and a guide surface with an end stop defining a maximum temperature limit and an intermediate stop. The intermediate stop is formed by a step of the guiding surface. A sprung ball is carried on a radial arm of the handle and runs over the guide surface of the stop ring as the handle is turned. by providing sufficient turning force the ball can move against the spring bias to override the intermediate stop and allow further rotation past the intermediate stop to increase the temperature above the intermediate limit. The housing is mostly arranged behind a cover plate.

US 2020/0182374 A1 describes a valve having a valve housing and a manually actuatable valve part which is arranged therein in longitudinally displaceable manner. The valve part comprises a latching device, which lets the valve part assume its respective adjustment position only in stages and in a releasable manner.

EP 3 438 542 A1 describes a gas valve comprising a tactile feedback device and a cooking appliance comprising said gas valve. The gas valve 10 comprises a valve body and an axially moveable rotating shaft coupled to said valve body. The tactile feedback device comprises a fixed portion and a rotating portion rotating integrally with a shaft. One portion comprises at least one follower arranged radially with respect to the shaft and the other portion comprises at least one circular guide section which comprises a plurality of contiguous housings and guides the follower during rotation of the shaft. The fixed portion comprises a base fixed to the valve body and the rotating portion comprise a support 40 fixed to the shaft of the valve.

The object underlying the invention is to provide a valve attachment achieving a tactile feedback with low costs.

This object is solved with a thermostatic valve attachment as described at the outset in that the handle is arranged rotatably with respect to the thermostatic element and the tactile feedback means are arranged between the handle and the thermostatic element.

In this case elements which are necessary for the function of the valve attachment are used to generate the tactile feedback. The term "tactile feedback" should be understood broadly and covers not only the sensation a user feels on his hand or fingers, but also covers other sensations, such as an audible or sound feedback or a combination of audible or sound feedback and feedback the user can feel in his hand when rotating the handle. Since the tactile feedback means are arranged between the handle and the thermostatic element, no additional space is necessary for the tactile feedback means.

In an embodiment of the invention the tactile feedback means comprise at least a spring, a latching element, and a latch geometry, wherein the spring acts on the latching element in direction towards the latch geometry. The latching element and the latch geometry together form a combination which produce alternatingly a higher resistance and a lower resistance against the rotational movement of the handle. The spring presses the latching element into the latch geometry. The effect is that the person rotating the handle feels a kind of a stepwise rotational movement of the handle.

In an embodiment of the invention the latch geometry is arranged at the thermostatic element and the spring and the latching element are arranged at the handle. A surface of the thermostatic element is used to form the latch geometry. The handle in turn is used to accommodate the spring and the latching element. This keeps costs of production low.

In an embodiment of the invention the latching element is in form of a ball. A ball can roll over the surface of the thermostatic element. Thus, the person rotating the handle feels alternatingly a larger and a lower resistance against movement. However, even the larger resistance can easily be overcome.

In an embodiment of the invention the ball is made of a metal. A metal ball is a low-cost element. A metal ball, for example a steel ball, is resistant against wear.

In an embodiment of the invention at least in the region of the latch geometry the thermostatic element is made of metal. This has two advantages. When the ball is made of a metal and the latch geometry is made of a metal, the person rotating the handle does not only feel a tactile feedback, but he can also hear a reaction when the metal ball is moved over the latch geometry. Furthermore, the wear of the thermostatic element in the region of the latch geometry can be kept small.

In an embodiment of the invention the thermostatic element comprises a step in a front face, wherein the latch geometry is arranged in the region of the step. In the region of the step the thermostatic element has a rather large mechanic stability. When the front face is provided with a step, it is possible to create a free space for accommodating the tactile feedback means.

In an embodiment of the invention the spring produces a force having at least a component in a direction parallel to the axis of rotation of the handle. In other words, the spring produces a force which is directed parallel to the axis of rotation or which is inclined to the axis of rotation. Thus, it is not necessary to increase the diameter of the handle or other parts of the valve attachment.

In an embodiment of the invention the latch geometry comprises a number of snap-in positions, wherein a distance between adjacent snap-in positions corresponds to a predetermined temperature set value difference to be controlled by the thermostatic element. In other words, an angular distance between adjacent snap-in positions corresponds to a change in the temperature set value of, for example 0,5°C or 1°C.

In an embodiment of the invention the spring is arranged in a guiding geometry in the handle. The guiding geometry can be, for example, a channel. The guiding geometry keeps the spring in place on the one hand and allows a compression of the spring on the other hand.

In an embodiment of the invention the ball is a first ball and a second ball is arranged at the end of the guiding geometry opposite to the thermostatic element. The second ball can be used to close the guiding geometry at the end opposite to the thermostatic element. This is a low-cost way to close the guiding geometry and facilitates the assembly of the valve attachment.

However, in an alternative embodiment the latch geometry is a first latch geometry and the handle comprises a lid rotatably fixed to the thermostatic element, wherein the lid comprises a second latch geometry and the second ball is pressed against the second latch geometry by means of the spring. The combination of the second ball and the second latch geometry forms a further means for producing a tactile feedback.

In an embodiment of the invention the first latch geometry extends over a first area in circumferential direction around the axis of rotation and the second latch geometry extends over a second area in circumferential direction around the axis of rotation, wherein the first area and the second area are different from each other. This has the effect that the tactile feedback from the first or from the second latch geometry can be assigned to different angular areas of the handle.

In an embodiment of the invention a first material pairing between the first latch geometry and the first ball is different from a second material pairing between the second latch geometry and the second ball. Thus, the person rotating the handle experiences different feedback in different angular positions of the handle.

In an embodiment of the invention the second latch geometry corresponds to rotational positions of the handle defining temperature set values above a predetermined first temperature and/or below a predetermined second temperature. This can be used to generate a first feedback in a temperature set value range, for example 18°C to 22°C, i.e. the "normal" temperature set value range, and to generate a second feedback outside the "normal" range above 22°C and/or below 18°C.

Embodiments of the invention will now be described in more detail with reference to the drawing, wherein:
- Fig. 1: shows an exploded view of a valve attachment,

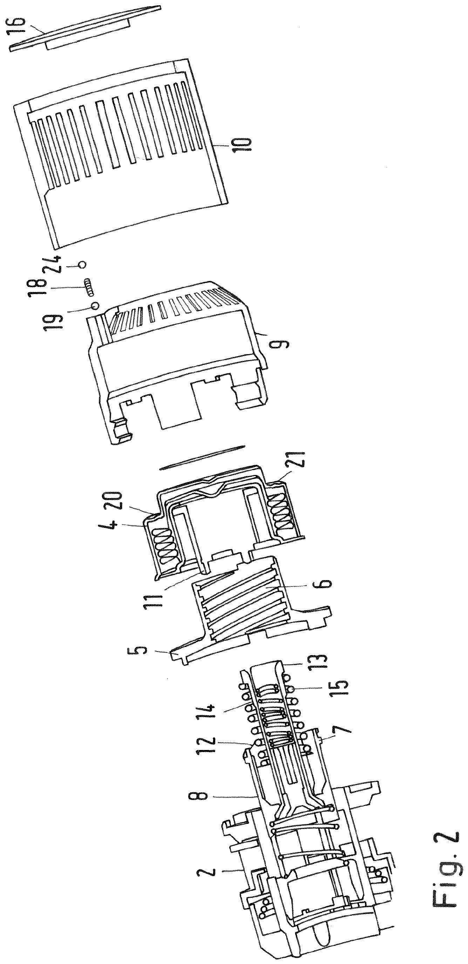

- Fig. 2: shows an exploded sectional view of the attachment according to Fig. 1,
- Fig. 3: shows a detail of a first embodiment of the invention and
- Fig. 4: shows a detail of a second embodiment of the invention.

In all Fig. the same and similar elements are denoted with the same reference numerals.

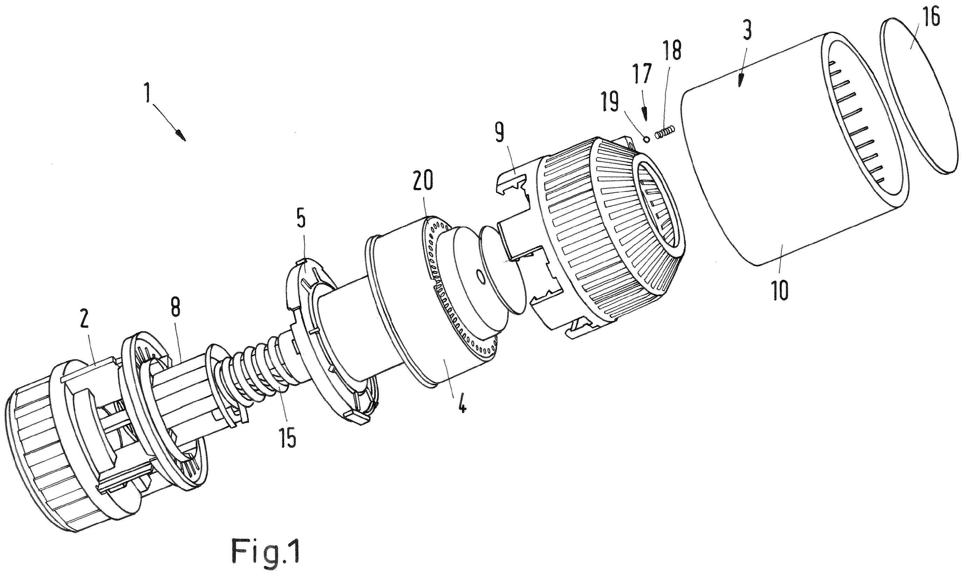

Fig. 1 shows a thermostatic valve attachment 1 comprising a base 2 and a handle 3. The base 2 can be used to attach the thermostatic valve attachment to a valve of a radiator or another heat exchanger. The thermostatic valve attachment can also be attached to a remote device which is not directly mounted at the valve, but controls the valve via other means.

The valve attachment 1 comprises a thermostatic element 4 which is in form of a bellows, however, which can have other forms. The thermostatic element 4 is mounted on a carrier 5. The carrier 5 comprises an inner thread 6 which is screwed onto an outer thread 7 on a part 8 of the base 2.

The handle 3 comprises an inner part 9 and an outer part 10. In an assembled condition of the valve attachment 1 the inner part 9 is in snap connection with the carrier 5. When the inner part 9 is rotated, the carrier 5 is also rotated. The rotation of the carrier 5 is translated in a translational movement of the carrier 5 and consequently into a translational movement of the thermostatic element 4.

The thermostatic element 4 is held non-rotatable in part 8 of the base 2. To this end, the thermostatic element 4 comprises a number of fingers 11 which are inserted into respective openings 12 at part 8 of the base 2. Part 8 of the base 2 comprises a plunge 13 which is actuated by the thermostatic element 4 against the force of a spring 14. Furthermore, the plunge 13 comprises an overload spring 15 as it is known in the art.

The valve attachment 1 comprises a lid 16 which can be considered as part of the handle 3. As explained below, in an embodiment of the invention the lid 16 is rotatably fixed to the thermostatic element 4.

The valve attachment 1 comprises tactile feedback means 17 having a spring 18 and a latching element 19. The latching element 19 cooperates with a latch geometry 20 which is provided at the thermostatic element 4. The latch geometry 20 can have different forms. One form shown in Fig. 1 comprises a large number of indentations or recesses in a front face of the thermostatic element 4. Other forms can have a number of protrusions at the same location. It is also possible to form the latch geometry as a sin-wave or a saw-tooth contour. Since the latch geometry 20 is provided at the thermostatic element 4, it can be made when the thermostatic element 4 is produced, so that the latch geometry 20 is produced without or at least with very small additional cost.

In the present case the thermostatic element 4 comprises a step 21 and the latch geometry 20 is arranged in the step 21.

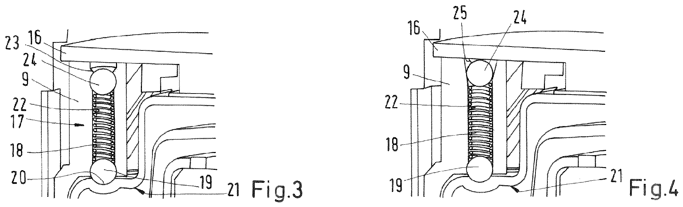

More details of the tactile feedback means 17 are shown in Fig. 3. The spring 18 is arranged in a guiding geometry 22 which can have the form of an axial channel. Thus, the spring 18 produces a force which is directed parallel to an axis of rotation of the handle 3. However, the spring 18 can be inclined with respect to the axis of rotation, e.g. enclose an angle of 45° at the most to the axis of rotation.

The latching element 19 is in form of a ball. In the sectional view shown in Fig. 3 the latching element 19 has entered a recess of the latch geometry 20.

The guiding geometry 22 comprises notches 23 or a single notch extending in circumferential direction around the guiding geometry 22 at the end of the guiding geometry 22 opposite to the latch geometry 20. A ball 24 rests against the notch 23 and forms a stop for the spring 18.

In a preferred embodiment the latch element 19 is a ball made of a metal, for example steel. The thermostatic element 4 is at least in the region of the latch geometry 20 also made of a metal, for example steel. In this case the person rotating the handle does both experience a feedback feeling in his fingers and a powerful sound feedback, when he rotates the handle. The noise produced is like a "click-clack". Such a noise is produced when the ball is moved from one recess to the next recess.

In a second embodiment shown in Fig. 4 the guiding geometry 22 does not have notches 23 at the end near the lid 16. However, the spring 18 is again arranged between the latching element 19 and the ball 24. It should be noted, that the ball 24 can be replaced by another latching element (same is true for the embodiment shown in Fig. 3). However, a ball is a low-cost element.

The lid 16 which is rotatably fixed to the thermostatic element 4 can have a second latch geometry 25 cooperating with the second ball 24. However, the first latch geometry 20 and the second latch geometry 25 can be assigned to different angular areas of the handle. This means that the side of the lid 16 facing the second ball 24 is smooth in an angular region in which the first latch geometry 20 has recesses, whereas the front face of the thermostatic element 4 facing the first latching element 19 is smooth in an angular area facing recesses (or protrusions) of the second latch geometry 25 in the lid 16.

Since in the first combination of latching element 19 and latch geometry 20 a material pairing of metal to metal is given and in the second combination of second ball 24 and lid 16 a material pairing of metal to plastic material is given, the user experiences different feedbacks.

This can be used to show the user that he is in a "normal" temperature set value region from, for example, 18°C to 22°C, wherein the second ball 24 and the second latching geometry 25 give a feedback in temperature set value ranges above 22°C and/or below 18°C. This increases comfort.

Another or additional possibility is to vary the form of the latch geometry 20, e.g. the depth of the recesses of the latch geometry 20 or the height of the indentations. This form could be different in different angular regions and thereby producing different sounds/feelings. For example one could use one form in the normal temperature set value range, e.g. from 18°C to 22°C, and another form when reaching areas above or below this range or when reaching the not so economic ranges. Likewise the frequency of the recesses and indentations (angular distance) could be varied, so that the user gets a tactile information when leaving, for example, the normal temperature set value range.

It is, however, also possible that the two latch geometries 20, 25 overlap each other partly or fully. In the first case the user gets likewise different feedbacks when only one latch geometry 20, 25 is "active" than in a case where both latch geometries 20, 25 are "active".

At least the first latch geometry 20 comprises or produces a number of snap-in positions. A distance between adjacent snap-in positions corresponds to a predetermined temperature set value difference to be controlled by the thermostatic element. This predetermined difference can be, for example, 0,5°C or 1°C.

## Claims

1. Thermostatic valve attachment (1) comprising a base (2), a handle (3) connected to the base (2), a thermostatic element (4) arranged at least partly in the handle (3), and tactile feedback means (17), wherein the handle (3) is rotatable around an axis of rotation, wherein the handle (3) is arranged rotatably with respect to the thermostatic element (4) and the tactile feedback means (17) are arranged between the handle (3) and the thermostatic element (4), wherein the tactile feedback means (17) comprises a latching element (19), a spring (18) and a latch geometry (20), **characterized in that** the latch geometry (20) is arranged on the thermostatic element (4).

2. Valve attachment according to claim 1, **characterized in that** the tactile feedback means (17) comprise at least a spring (18), a latching element (19), and a latch geometry (20), wherein the spring (18) acts on the latching element (19) in direction towards the latch geometry (20).

3. Valve attachment according to claim 2, **characterized in that** the latch geometry (20) is arranged at the thermostatic element (4) and the spring (18) and the latching element (19) are arranged at the handle (3).

4. Valve attachment according to claim 2 or 3, **characterized in that** the latching element (19) is in form of a ball.

5. Valve attachment according to claim 4, **characterized in that** the ball is made of a metal.

6. Valve attachment according to claim 4 or 5, **characterized in that** at least in the region of the latch geometry (20) the thermostatic element (4) is made of metal.

7. Valve attachment according to claim 2 to 6, **characterized in that** the thermostatic element (4) comprises a step (21) in a front face, wherein the latch geometry (20) is arranged in the region of the step (21).

8. Valve attachment according to any of claims 2 to 7, **characterized in that** the spring (18) produces a force having at least a component in a direction parallel to the axis of rotation of the handle (3).

9. Valve attachment according to any of claims 2 to 8, **characterized in that** the latch geometry (20) comprises a number of snap-in positions, wherein a distance between adjacent snap-in positions corresponds to a predetermined set value temperature difference to be controlled by the thermostatic element (4).

10. Valve attachment according to any of claims 2 to 9, **characterized in that** the spring (18) is arranged in a guiding geometry (22) in the handle (3).

11. Valve attachment according to claim 10, **characterized in that** the ball is a first ball and a second ball (24) is arranged at the end of the guiding geometry (22) opposite to the thermostatic element (4).

12. Valve attachment according to claim 11, **characterized in that** the latch geometry (20) is a first latch geometry and the handle (3) comprises a lid (16) rotatably fixed to the thermostatic element (4), wherein the lid (16) comprises a second latch geometry (25) and the second ball (24) is pressed against the second latch geometry (25) by means of the spring (18).

13. Valve attachment according to claim 12, **characterized in that** the first latch geometry (20) extends over a first area in circumferential direction around the axis of rotation and the second latch geometry (25) extends over a second area in circumferential direction around the axis of rotation, wherein the first area and the second area are different from each other.

14. Valve attachment according to claim 13, **characterized in that** a first material pairing between the first latch geometry (20) and the first ball is different from a second material pairing between the second latch geometry (25) and the second ball (24).

15. Valve attachment according to claim 13 or 14, **characterized in that** the second latch geometry (25) corresponds to rotational positions of the handle (3) defining temperature set values above a predetermined first temperature and/or below a predetermined second temperature.

## Patentansprüche

1. Thermostatischer Ventilaufsatz (1) mit einer Basis (2), einem mit der Basis (2) verbundenen Griff (3), einem zumindest teilweise im Griff (3) angeordneten Thermostatelement (4) und taktilen Rückkopplungsmitteln (17), wobei der Griff (3) um eine Drehachse drehbar ist, wobei der Griff (3) drehbar in Bezug auf das Thermostatelement (4) angeordnet ist und die taktilen Rückkopplungsmittel (17) zwischen dem Griff (3) und dem Thermostatelement (4) angeordnet sind, wobei die taktilen Rückkopplungsmittel (17) ein Verriegelungselement (19), eine Feder (18) und eine Verriegelungsgeometrie (20) umfassen, **dadurch gekennzeichnet, dass** die Verriegelungsgeometrie (20) auf dem Thermostatelement (4) angeordnet ist.

2. Ventilaufsatz nach Anspruch 1, **dadurch gekennzeichnet, dass** die taktilen Rückkopplungsmittel (17) mindestens eine Feder (18), ein Rastelement (19) und eine Rastgeometrie (20) umfassen, wobei die Feder (18) auf das Rastelement (19) in Richtung auf die Rastgeometrie (20) wirkt.

3. Ventilaufsatz nach Anspruch 2, **dadurch gekennzeichnet, dass** die Rastgeometrie (20) am Thermostatelement (4) und die Feder (18) und das Rastelement (19) am Griff (3) angeordnet sind.

4. Ventilaufsatz nach Anspruch 2 oder 3, **dadurch gekennzeichnet, dass** das Rastelement (19) als Kugel ausgebildet ist.

5. Ventilaufsatz nach Anspruch 4, **dadurch gekennzeichnet, dass** die Kugel aus einem Metall gefertigt ist.

6. Ventilaufsatz nach Anspruch 4 oder 5, **dadurch gekennzeichnet, dass** zumindest im Bereich der Rastgeometrie (20) das Thermostatelement (4) aus Metall gebildet ist.

7. Ventilaufsatz nach einem der Ansprüche 2 bis 6, **dadurch gekennzeichnet, dass** das Thermostatelement (4) in einer Stirnfläche eine Stufe (21) aufweist, wobei die Rastgeometrie (20) im Bereich der Stufe (21) angeordnet ist.

8. Ventilaufsatz nach einem der Ansprüche 2 bis 7, **dadurch gekennzeichnet, dass** die Feder (18) eine Kraft erzeugt, die zumindest eine Komponente in einer zur Drehachse des Griffs (3) parallelen Richtung aufweist.

9. Ventilaufsatz nach einem der Ansprüche 2 bis 8, **dadurch gekennzeichnet, dass** die Rastgeometrie (20) eine Anzahl von Rastpositionen aufweist, wobei ein Abstand zwischen benachbarten Rastpositionen einer durch das Thermostatelement (4) zu steuernden Sollwert-Temperaturdifferenz entspricht.

10. Ventilaufsatz nach einem der Ansprüche 2 bis 9, **dadurch gekennzeichnet, dass** die Feder (18) in einer Führungsgeometrie (22) im Griff (3) angeordnet ist.

11. Ventilaufsatz nach Anspruch 10, **dadurch gekennzeichnet, dass** die Kugel eine erste Kugel ist und eine zweite Kugel (24) an dem dem Thermostatelement (4) gegenüberliegenden Ende der Führungsgeometrie (22) angeordnet ist.

12. Ventilaufsatz nach Anspruch 11, **dadurch gekennzeichnet, dass** die Rastgeometrie (20) eine erste Rastgeometrie ist und der Griff (3) einen am Thermostatelement (4) drehbar befestigten Deckel (16) aufweist, wobei der Deckel (16) eine zweite Rastgeometrie (25) aufweist und die zweite Kugel (24) mittels der Feder (18) gegen die zweite Rastgeometrie (25) gedrückt wird.

13. Ventilaufsatz nach Anspruch 12, **dadurch gekennzeichnet, dass** sich die erste Rastgeometrie (20) über einen ersten Bereich in Umfangsrichtung um die Drehachse erstreckt und sich die zweite Rastgeometrie (25) über einen zweiten Bereich in Umfangsrichtung um die Drehachse erstreckt, wobei der erste Bereich und der zweite Bereich voneinander verschieden sind.

14. Ventilaufsatz nach Anspruch 13, **dadurch gekennzeichnet, dass** eine erste Materialpaarung zwischen der ersten Rastgeometrie (20) und der ersten Kugel von einer zweiten Materialpaarung zwischen der zweiten Rastgeometrie (25) und der zweiten Kugel (24) verschieden ist.

15. Ventilaufsatz nach Anspruch 13 oder 14, **dadurch gekennzeichnet, dass** die zweite Rastgeometrie (25) Drehstellungen des Griffs (3) entspricht, die Temperatursollwerte oberhalb einer vorgegebenen ersten Temperatur und/oder unterhalb einer vorgegebenen zweiten Temperatur definieren.

## Revendications

1. Fixation de soupape thermostatique (1) comprenant une base (2), une poignée (3) reliée à la base (2), un élément thermostatique (4) agencé au moins partiellement dans la poignée (3), et des moyens de retour tactile (17), où la poignée (3) est rotative autour d'un axe de rotation, où la poignée (3) est agencée en rotation par rapport à l'élément thermostatique (4) et les moyens de retour tactile (17) sont agencés entre la poignée (3) et l'élément thermostatique (4), où les moyens de retour tactile (17) comprennent un élément de verrouillage (19), un ressort (18) et une géométrie de verrouillage (20), **caractérisée en ce que** la géométrie de verrouillage (20) est agencée sur l'élément thermostatique (4).

2. Fixation de soupape selon la revendication 1, **caractérisée en ce que** les moyens de retour tactile (17) comprennent au moins un ressort (18), un élément de verrouillage (19), et une géométrie de verrouillage (20), où le ressort (18) agit sur l'élément de verrouillage (19) en direction de la géométrie de verrouillage (20).

3. Fixation de soupape selon la revendication 2, **caractérisée en ce que** la géométrie de verrouillage (20) est agencée au niveau de l'élément thermostatique (4) et le ressort (18) et l'élément de verrouillage (19) sont agencés au niveau de la poignée (3).

4. Fixation de soupape selon la revendication 2 ou 3, **caractérisée en ce que** l'élément de verrouillage (19) est sous forme de bille.

5. Fixation de soupape selon la revendication 4, **caractérisée en ce que** la bille est réalisée en un métal.

6. Fixation de soupape selon la revendication 4 ou 5, **caractérisée en ce qu'**au moins dans la région de la géométrie de verrouillage (20), l'élément thermostatique (4) est réalisé en un métal.

7. Fixation de soupape selon les revendications 2 à 6, **caractérisée en ce que** l'élément thermostatique (4) comprend un épaulement (21) dans une face avant, où la géométrie de verrouillage (20) est agencée dans la région de l'épaulement (21).

8. Fixation de soupape selon l'une des revendications 2 à 7, **caractérisée en ce que** le ressort (18) produit une force ayant au moins une composante dans une direction parallèle à l'axe de rotation de la poignée (3).

9. Fixation de soupape selon l'une des revendications 2 à 8, **caractérisée en ce que** la géométrie de verrouillage (20) comprend un certain nombre de positions d'encliquetage, où une distance entre des positions d'encliquetage adjacentes correspond à une différence de température de valeur de consigne prédéterminée à commander par l'élément thermostatique (4).

10. Fixation de soupape selon l'une des revendications 2 à 9, **caractérisée en ce que** le ressort (18) est agencé dans une géométrie de guidage (22) dans la poignée (3).

11. Fixation de soupape selon la revendication 10, **caractérisée en ce que** la bille est une première bille et une deuxième bille (24) est agencée au niveau de l'extrémité de la géométrie de guidage (22) opposée à l'élément thermostatique (4).

12. Fixation de soupape selon la revendication 11, **caractérisée en ce que** la géométrie de verrouillage (20) est une première géométrie de verrouillage et la poignée (3) comprend un couvercle (16) fixé en rotation à l'élément thermostatique (4), où le couvercle (16) comprend une deuxième géométrie de verrouillage (25) et la deuxième bille (24) est pressée contre la deuxième géométrie de verrouillage (25) au moyen du ressort (18).

13. Fixation de soupape selon la revendication 12, **caractérisée en ce que** la première géométrie de verrouillage (20) s'étend sur une première zone dans une direction circonférentielle autour de l'axe de rotation et la deuxième géométrie de verrouillage (25) s'étend sur une deuxième zone dans une direction circonférentielle autour de l'axe de rotation, où la première zone et la deuxième zone sont différentes l'une de l'autre.

14. Fixation de soupape selon la revendication 13, **caractérisée en ce qu'**un premier appariement de matériaux entre la première géométrie de verrouillage (20) et la première bille est différent d'un deuxième appariement de matériaux entre la deuxième géométrie de verrouillage (25) et la deuxième bille (24).

15. Fixation de soupape selon la revendication 13 ou 14, **caractérisée en ce que** la deuxième géométrie de verrouillage (25) correspond à des positions de rotation de la poignée (3) définissant des valeurs de consigne de température supérieures à une première température prédéterminée et/ou inférieures à une deuxième température prédéterminée.
